# EUROPEAN PATENT APPLICATION

(11) **EP 2 574 073 A1**
(43) Date of publication of application: **27.03.2013**
(21) Application number: 11306218.6
(22) Date of filing: 26.09.2011
(51) Int. Cl.: H04N 21/488, H04N 21/258

(54) **Generation of tickers**

(71) Applicant: Alcatel Lucent, 75007 Paris (FR)
(72) Inventor: Mathialagan, Alexander, 600015 Chennai (IN)
(74) Representative: Sciaux, Edmond

(57) **Abstract**

Methods for providing tickers are described herein. The method includes gathering ticker information corresponding to a ticker addition request provided by a user device. Based in part on the ticker information, at least one ticker to be generated may be identified. The at least one ticker may be generated based on preferences of a user associated with the user device. Further, a video stream having the at least one ticker may be provided for displaying on the user device.

## Description

### FIELD OF INVENTION

The present subject matter relates to providing information on a display device and, particularly but not exclusively, to providing information by way of tickers on the display device.

### BACKGROUND

Entertainment devices, such as televisions, computers, and mobile phones, have seemingly become ubiquitous part of today's lifestyle. The entertainment devices are configured to receive media content provided by broadcast signals to users. With the recent advances in technology and growing competition, a large number of television channels are accessible using the entertainment devices. Owing to the large number of channels, a large variety of the media content is available. For example, today there are multiple news channels, music channels, movie channels, and so on.

A user may surf these channels for selecting a channel that broadcasts media content of his interests. Generally, at a time, user may be able to view content or information related only one of the channels that are being broadcasted. Thus, in case a user wishes to view content pertaining to two channels or wishes to view some other information, for example, stock prices, he may have to constantly switch between the content sources. Such switching may be inconvenient for the users and may frustrate them. Further, in certain cases, where the user has to switch between multiple channels, with increasing number of channels it's often a tedious and time-consuming task to surf a number of channels to find a channel providing the required content.

### SUMMARY

This summary is provided to introduce concepts related to automatic generation of event messages. This summary is not intended to identify essential features of the claimed subject matter nor is it intended for use in determining or limiting the scope of the claimed subject matter.

In an embodiment, a method includes gathering ticker information corresponding to a ticker addition request provided by a user device. In an example, it may be ascertained whether the ticker addition request provided by the user device is valid and the ticker information may be gathered for a valid ticker addition request. The ticker information includes, for example, at least one of a user ID associated with the user device, a ticker ID associated with the ticker, and a channel ID of media content currently being provided to the user device. Based in part on the ticker information, at least one ticker to be generated may be identified. The ticker may be generated based on preferences of a user associated with the user device. Further, a video stream having the ticker may be provided for displaying on the user device.

In an implementation, content corresponding to the ticker may be created to generate the ticker. In an example, to create the content, the content corresponding to the ticker may be obtained from Really Simple Syndication (RSS) feeds from a web profile associated with the user device. In one implementation, the method further includes providing the video stream without the ticker when a ticker removal request is received.

In another embodiment, a ticker generation system for providing tickers is described. The ticker generation system includes a processor and a memory coupled to the processor. The memory includes a ticker identification module and a ticker generation module. The ticker identification module may be configured to identify at least one ticker to be generated based in part on ticker information associated with a ticker addition request provided by a user device. In an example, the ticker addition request may be provided in a membership report. The ticker generation module may be configured to generate the ticker based on preferences of a user associated with the user device and a video stream having the ticker based on the preferences of the user. In an implementation, the ticker generation may be further configured to provide the video stream with a modified ticker corresponding to a ticker modification trigger provided by the user device.

In an example, the ticker generation system implements one of an internet group management protocol (IGMP) and direct television broadcast (DTB) service protocol.

In accordance with another embodiment of the present subject matter, a computer readable medium having embodied thereon a computer program for executing a method is described. The computer readable medium performs acts including gathering ticker information corresponding to a ticker addition request provided by a user device and identifying at least one ticker to be generated based in part on the ticker information. The computer readable medium may further perform the acts of generating the ticker and a video stream having the ticker based on preferences of a user associated with the user device. The video stream may correspond to media content currently running on the user device. In an example, the method may further include unicasting the video stream having the ticker to the user device.

In another embodiment, a subscriber entity including a processor and a memory coupled to the processor is described. The memory includes a subscription module configured to ascertain whether a ticker addition request provided by a user device is valid and forward the ticker addition request to a ticker generation system, when the ticker addition request is valid.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Fig. 1 illustrates a network environment implementing a ticker generation system, according to an embodiment of the present subject matter.

Fig. 2a illustrates various components of the ticker generation system, according to an embodiment of the present subject matter.

Fig. 2b illustrates a ticker generation message flow diagram, according to an embodiment of the present subject matter.

Fig. 3 illustrates a method for ticker generation, according to an embodiment of the present subject matter

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

Systems and methods for generation of tickers based on user preferences are described. The systems and methods can be implemented using a variety of computing devices. Examples of such computing devices include, but are not limited to, desktop computers, hand-held devices, servers, mainframe computers, laptops or other portable computers, and the like. The system and methods can be implemented using a variety of transmission technologies. Examples of such technologies include, but are not limited to, satellite transmissions, such as direct-to-home (DTH) transmissions, and terrestrial transmissions such as Internet Protocol (IP) transmissions. The IP transmissions may be used for live television as well as for stored video.

Tickers may be understood as messages that are displayed in addition to the content currently being broadcasted corresponding to a television channel, hereinafter referred to as channel, viewed by a user. For example, during a news broadcast, headlines or breaking news may appear, say, on bottom of a display unit of a user device. Such additional content, i.e., the headlines or the breaking news may be understood as tickers. Similarly, while broadcast of a soccer match, the current score and other related facts may be provided as a ticker.

However, generally users have no provision of selecting a type, a format, layout, etc. of a ticker. Therefore, the users may have to view the tickers, which are currently being provided by a particular channel operator. Thus, in a case, there is only one user device available and a user wishes to watch news but at the same time another user wants to keep a track of score of a soccer match; then either one of the users may have to compromise or the users may have to switch between the news channel and the sports channel, which neither of the users would prefer. Additionally, if a user is expecting an important message on his social website profile, such as, Facebook™ but at the same a movie of his interest is being currently broadcasted by a movie channel, then the user may have to continuously switch between the message window and the movie window. Again, such switching between various windows may not be preferred by the user.

According to an embodiment of the present subject matter, tickers are generated based on preferences of a user. The tickers may provide information such as, news items, match scores, stock prices, and Really Simple Syndication (RSS) feeds associated with a web profile of a user. The ticker may include data in various forms, such as, text, images, links, or any combination thereof.

In one implementation, users may subscribe to a ticker generation service provided by service provider. The user may provide details pertaining to their preferences regarding tickers either while subscribing or at a later point in time, say, as and when he wishes to change the preferences. It will be understood the user may prefer to have multiple tickers as well. To get a ticker along with the currently broadcasted channel, a user may send a ticker addition request. Upon receiving the ticker addition request it may be determined if the user sending the ticker addition request has subscribed for the ticker generation service or not. If it is determined that the user is a valid subscriber, at least one ticker preferred by a user may be identified. Further, it may be determined whether the identified ticker is unavailable in a subscriber database. The subscriber database may include a list of users who have subscribed for the ticker generation service.

In case it is determined that the identified ticker is unavailable, the ticker may be created based on user preferences. For example, if the user has selected RSS feeds of his personal web account, then these feeds may be extracted and converted into a ticker. On the other hand, if the identified ticker is already available, the identified ticker may be extracted. The extracted ticker may be superimposed with a currently running video stream corresponding to the channel being viewed by the user.

Further, ticker may be superimposed on the video stream based on layout, design or ticker position selected by the user. In an example, the video stream having the ticker is directly provided to the user as a unicast service. In one implementation, the user may be provided with the ticker, until a ticker removal request is received.

Thus, according to the present subject matter, users may have tickers based on their preferences instead of the watching the ones that are provided by a broadcaster. Further, the users in addition to viewing to a currently running channel may also get updates regarding other events. In an example, the user may continue to receive the ticker even after switching the channels. Accordingly, the user may not have to switch between multiple channels or windows to get the required content, thereby providing comfort to users and saving on time and energy Furthermore, an operator may charge for such a ticker generation service, which may in turn increase an operator's revenue.

It should be noted that the description and figures merely illustrate the principles of the present subject matter. It will thus be appreciated that those skilled in the art will be able to devise various arrangements that, although not explicitly described or shown herein, embody the principles of the present subject matter and are included within its spirit and scope. Furthermore, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

It will also be appreciated by those skilled in the art that the words during, while, and when as used herein are not exact terms that mean an action takes place instantly upon an initiating action but that there may be some small but reasonable delay, such as a propagation delay, between the initial action and the reaction that is initiated by the initial action. Additionally, the word "connected" is used throughout for clarity of the description and can include either a direct connection or an indirect connection.

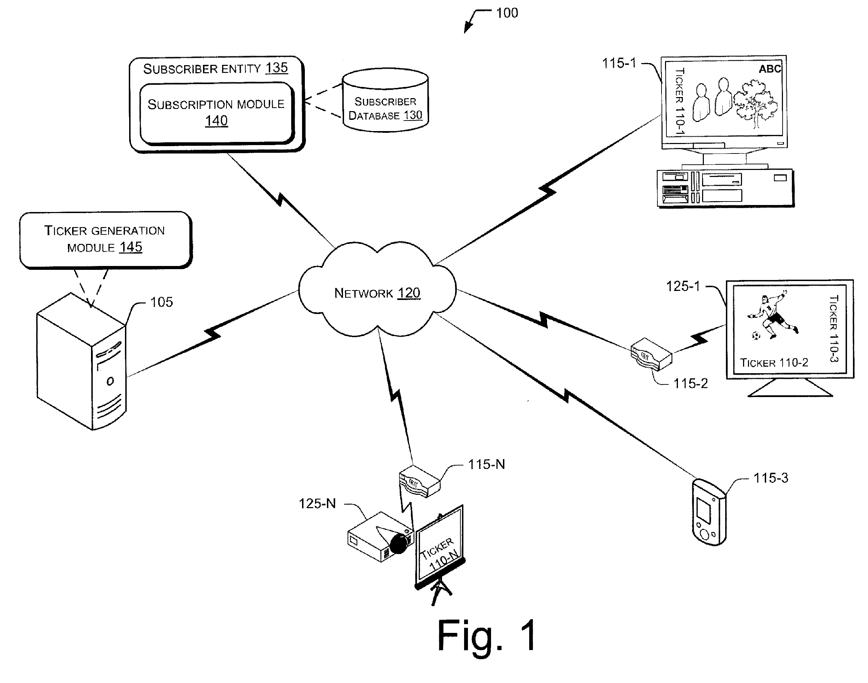

Fig. 1 illustrates a network environment 100 implementing a ticker generation system 105 for generating tickers 110, such as ticker 110-1, 110-2, 110-3... 110-N, according to an embodiment of the present subject matter. In one implementation, the ticker generation system 105 is implemented for video on demand services. Although the description herein is with reference to IP networks, the systems and methods may be implemented in other transmission technologies and networks, such as, direct television broadcast (DTB) service protocols, albeit with a few variations, as will be understood by a person skilled in the art.

The network environment 100 includes one or more user devices 115-1, 110-2, 110-3, and 110-N, collectively referred to as user device(s) 110, communicating with each other and the ticker generation system 105 through a network 120.

The network 120 may be a combination of wired and wireless networks. The network 120 may be implemented by the service provider systems through satellite communication, terrestrial communication, or may be implemented through the use of routers and access points connected to various Digital Subscriber Line Access Multiplexers (DSLAMs) of wired networks. The network 120 can be implemented as one of the different types of networks, such as intranet, telecom network, local area network (LAN), wide area network (WAN), Virtual Private Network (VPN), internetwork, Global Area Network (GAN), the Internet, and such. The network 120 may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other.

The ticker generation system 105 may be implemented as a desktop computer, a hand-held device, a server, a mainframe computer, a laptop or other portable computer, and the like. Further, the user devices 115 may include, without limitation, televisions, set top boxes (STBs), digital video recorders, computing devices, multi-media enabled phones or smartphones, or any combination thereof. The user devices 115, such as STBs may be associated with display units 125, such as, display units 125-1, ... 125-N. Examples of display units 125 include an electro luminescent display (ELD), a plasma display panel (PDP), an organic light emitting diode (OLED), a light emitting diode (LED) display, a liquid crystal display (LCD), and a thin-film transistor LCD (TFT-LCD). For example, the user device 115-2, such as a STB may be associated with the display unit 125-1, such as a monitor while the user device 115-N may be a digital video recorder that may be associated with one or more display units 125, such as a projector and a display screen 120-N.

In an implementation, a user may subscribe to a ticker generation service provided by an operator or a service provider. While subscribing the user may provide his preferences for the ticker 110, for example, content, layout or design, various attributes such as, a static ticker and a scrolling ticker; and position on a display, for example, the ticker 110 may be displayed horizontally, vertically, left side, or right side. The content of the tickers 110 may include, for example, information gathered from numerous RSS feeds associated with the user's web account, news, stock prices, match scores, user specific content, such as some caption, text, or image provided by the user. The user preferences may be stored within the ticker generation system 105, Each of the users may be further identifiable by a user ID. Similarly, each of the tickers 110 can also be associated with a ticker ID. In one implementation, various user preferences can be associated with the user IDs, corresponding to the respective users.

Additionally, each user ID may be associated with one or more ticker IDs of the one or more tickers 110 preferred by a user corresponding to the user ID. Thus, the user may provide multiple preferences for the ticker 110 to be generated. For example, the user may select news items as well as the RSS feeds associated with his web profile. In said example, both the two tickers may be provided, or the ticker regarding news items and the ticker regarding RSS feeds may be provided alternately, or based on the user's request, one of the tickers 110 may be provided. In one embodiment, based on the user preference, the news may appear as a scrolling ticker at the bottom af the display unit 125 while the RSS feeds may be displayed as static tickers in a vertical line on one end of the display unit 125.

In an example, in order to get the RSS feeds related to their web accounts with various social networking platforms or email service providers, the user may provide various account details like, user name, password details, etc. to the ticker generation system 105. Further, a list of users who have subscribed for this service may be stored in a subscriber database 130, which may be associated with a subscriber entity 135. Although the subscriber database 130 has been illustrated external to the subscriber entity 135, it may be integrated with the subscriber entity 135 as well. In an example, the subscriber entity 135 can be a router, such as, a DSLAM, provided in an access network section of the network 120.

In order to have the tickers 110 along with the currently broadcasted media content, a user may send a ticker addition request. In one implementation, the ticker addition request is first received by the subscriber entity 135. The subscriber entity 135 may be implemented in a computing device, which may include, amongst other things, a processor (not shown in the figures) and a memory (not shown in the figures) coupled to the processor. The memory may include a subscription module 140, which may determine if the user sending the ticker addition request has subscribed for the ticker generation service or not. For the purpose, the subscription module 140 may query the subscriber database 130. Although, the check regarding subscription of a user is explained with respect to the subscriber entity 135, it will be understood that any other subscriber entity, say, a router provided in the access network segment of the network 120 may also be used to perform such a check. Alternatively, such a feature may also be provided on the ticker generation system 105. For example, for DTH services, the ticker addition request may be received by the ticker generation system 105 and a check regarding validity of the ticker addition request may be performed by the ticker generation system 105.

In an implementation, it is determined that the user is not a valid subscriber, the subscription module 140 may discard the request. On the other hand, if it is determined that the user is a valid subscriber, the subscription module 140 may forward the request to the ticker generation system 105. Upon receiving the ticker addition request, the ticker generation system 105 may identify the one or more tickers 110 to be generated. Further, it may be determined whether a ticker 110 that a user has requested is already available. Alternately, in case the ticker 110 is unavailable, the ticker generation system 105 may create the ticker 110.

Further, upon obtaining the ticker 110, a ticker generation module 145 of the ticker generation system 105 may provide the ticker 110 along with a video stream corresponding to the channel being currently viewed by the user. Accordingly, the ticker 110 requested by the user may be provided to the user device 115 associated with the user and may be displayed on the corresponding display unit 125. Thus, the user may have an option of receiving information pertaining to multiple events, which may add to user's comfort or user experience. In one example, the user may temporarily switch off the ticker generation service and trigger the same as and when required. Further, the user may also be provided with a provision to change his preferences, whenever he wishes to. For example, the user may provide a ticker modification trigger to change a scrolling direction of the ticker 110, may make a static ticker to scroll and vice versa, may change a position of the ticker 110 on the display unit 125, and may change the content of the ticker 110, such as, the user may wish to view news snippets instead of RSS feeds.

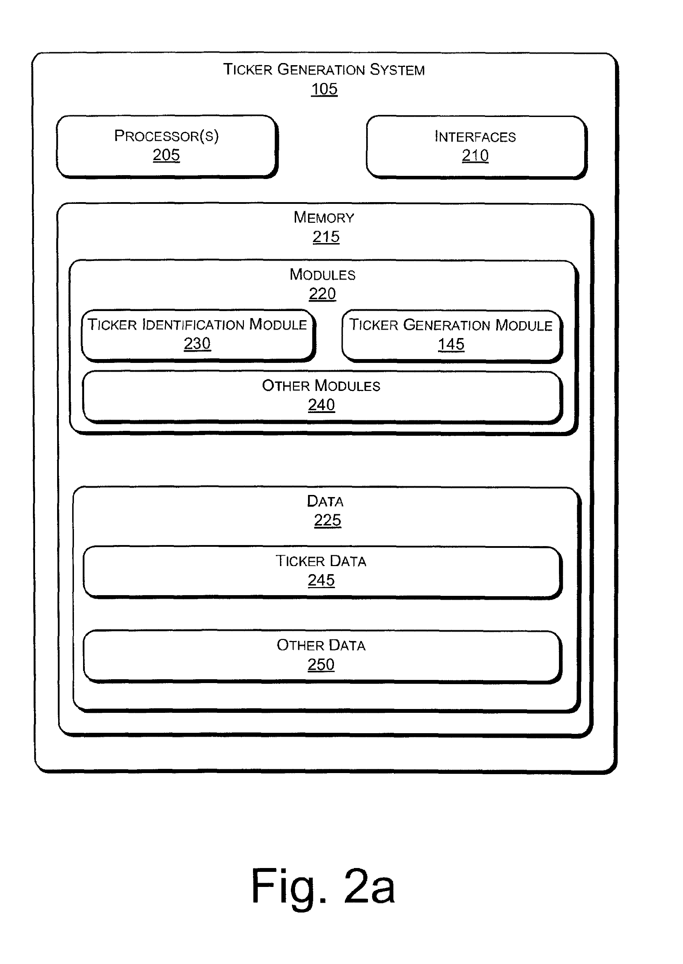

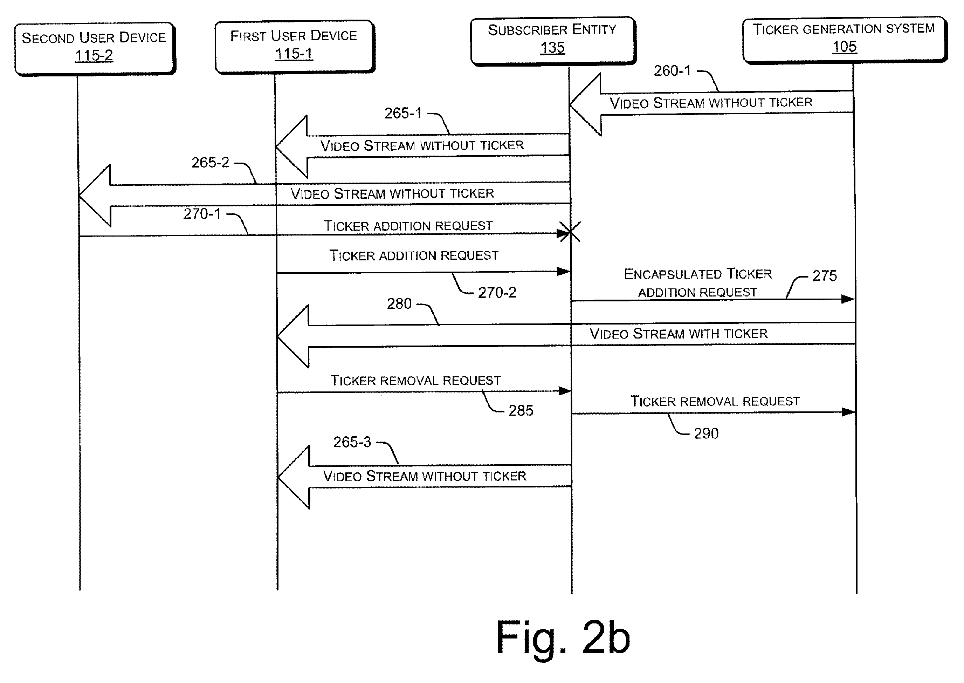

Fig. 2a illustrates components of the ticker generation system 105 and Fig. 2b illustrates a ticker generation message flow diagram, according to an embodiment of the present subject matter. Although Fig. 2a and Fig. 2b have been explained with reference to internet group management protocol (IGMP) implemented for IPTV technology; it will be understood that the same principles may be extended to other protocols and other technologies as well.

In one implementation, the ticker generation system 105 may be implemented in an operator end server. The ticker generation system 105 includes one or more processor(s) 205, interface(s) 210 and a memory 215 coupled to the processor 205. The processor 205 can be a single processing unit or a number of units, all of which could also include multiple computing units. The processor 205 may be implemented as one or more microprocessors, microcomputers, microcontrollers, digital signal processors, central processing units, state machines, logic circuitries, and/or any devices that manipulate signals based on operational instructions. Among other capabilities, the processor 205 is configured to fetch and execute computer-readable instructions and data stored in the memory 215.

The functions of the various elements shown in the figures, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The interfaces 210 may include a variety of software and hardware interfaces, for example, interface for peripheral device(s), such as a keyboard, a mouse, an external memory, and a printer. Further, the interfaces 210 may enable the ticker generation system 105 to communicate with other computing devices, such as the user devices 115 and network entities, such as, the subscriber entity 135, in the network 120. Further, through the interfaces 210, the ticker generation system 105 may be associated with servers corresponding to various television or multimedia based broadcasters, such as, CNN™, Star World™, and BBC™ or website portals, such as, bbc.co.uk™ and espnstar.com™, to gather media content that is provided to the user devices 115.

The memory 215 may include any computer-readable medium known in the art including, for example, volatile memory such as static random access memory (SRAM) and dynamic random access memory (DRAM), and/or non-volatile memory, such as read only memory (ROM), erasable programmable ROM, flash memories, hard disks, optical disks, and magnetic tapes. The memory 215 also includes module(s) 220 and data 225.

The module(s) 220 include routines, programs, objects, components, data structures, etc., which perform particular tasks or implement particular abstract data types. The module(s) 220 further includes a ticker identification module 230, the ticker generation module 145, and other module(s) 240. The other module(s) 240 may include programs or coded instructions that supplement applications and functions of the ticker generation system 105.

On the other hand, the data 225, amongst other things, serves as a repository for storing data processed, received, and generated by one or more of the module(s) 220. The data 225 includes, for example, ticker data 245 and other data 250. The other data 250 includes data generated as a result of the execution of one or more modules in the other module(s) 240.

For the purpose of explanation, and not as a limitation, the ticker generation system 105 may be implemented in a server of a service provider. The service provider may provide content broadcasted by the various channels to a user. For example, the service provider may provide DTH services or an IPTV service. However, it will be understood that the ticker generation system 105 may external to the server as well. The server may be configured to provide video streams corresponding to various channels to the user devices 115.

As mentioned earlier, the ticker generation system 105 may generate the tickers 110, based on user preferences. Referring to an example depicted in Fig. 2b, users, say, a first user may request to receive same media content or in other words may request to receive same television channel. The first user may request through corresponding first user device 115-1 and the second user may request through the second user device 115-2. For the purpose of explanation, the first user device 115 may be interchangeably referred to as first user 115-1 and the second user device 115-2 may be interchangeably referred to as the second user 115-2. Further, the users 115-1 and 110-2 may be collectively referred to as the users 115. In said example, it may be considered that none of the users 115 have sent ticker addition requests to the ticker generation system 105 or none of the users 115 have registered or subscribed for the ticker generation service Accordingly, the ticker generation system 105 may provide a video stream 260 to the subscriber entity 135 as illustrated in Figure 2b. The video stream may include media content without any ticker. The media content is the content currently being viewed by the users. Further, the media content may correspond to live broadcast or recorded content. For example, the users 115 may be viewing recorded cricket match. In another example, the users 115 may be watching a media content currently being broadcasted by a media content provider or a channel operator.

The subscriber entity 135 may in turn provide this video stream to the users 115. The subscriber entity 135, through multicast service, may provide the video streams 265-1 and 265-2 without tickers, received from the ticker generation system 105 to the first user 115-1 and the second user 115-2, respectively. In an example, to provide multicasting services the subscriber entity may have IGMP proxy enabled. In case the IGMP proxy is enabled, and a user, say, the first user 115-1 requests to view a channel, which is already being viewed by one or more users in the same group, the subscriber entity 135 instead of sending this request to the ticker generation system 105, may duplicate the video stream corresponding to the channel and send it to the user.

In an implementation, the users 115 may get a ticker 110 customized according to one or more preferences. The preferences can be provided by subscribing to a ticker generation service provided by the service provider at the time of subscribing to the ticker 110. Each of the tickers 110 may have a ticker ID. The ticker ID and content corresponding to the ticker IDs may be stored in the ticker data 245. For example, news ticker may have a particular ticker ID and updates from popular news channels may stored as corresponding content. Likewise, stock prices and match scores, RSS feeds about a popular website and updates on a social networking site associated with a user may include content corresponding to the relevant information requested. Further, the ticker generation module 245 may be configured to fetch information from the website portals and servers associated with various broadcasters. Although the ticker data 245 has been illustrated internal to the ticker generation system 105, it will be understood that the ticker data 245 may be provided in an external database as well.

In an example, the first user 115-1 may subscribe for the ticker generation service, while the second user 115-2 may not subscribe for the ticker generation service. The first user 115-1 may send ticker addition requests requesting the ticker generation system 105 to provide a video stream with one or more tickers 110 based on his preferences. In an implementation, the ticker addition request may be sent by the first user 115-1, in a membership report. This membership report instead of indicating that whether it is a join request or not, may be used to indicate that whether it is ticker addition request or not. For the purpose, "type" field of the membership report may be populated accordingly by the user device. Further, the ticker addition request may also include a user ID corresponding to the first user device 115 that had sent the ticker addition request.

In one implementation, the ticker addition request is first received by the subscriber entity 135. The subscriber entity 135 may determine if the user, for example, the first user 115-1, sending the ticker addition request has subscribed for the ticker generation service or not. For the purpose, the subscriber entity 135 may look up in the subscriber database 130. If it is determined that the user is not a valid subscriber, the subscriber entity 135 may discard the ticker addition request. On the other hand, if it is determined that the user is a valid subscriber, the subscriber entity 135 may forward the ticker addition request to the ticker generation system 105. Further, the subscriber entity 135 may provide the details pertaining to media content being currently viewed by a user, say, the first user 115-1, through IGMP snooping. The information pertaining to the media content being currently viewed by the first user 115-1 may be provided by or fetched from the subscriber entity 135.

Referring to the example mentioned above, the first user 115-1 and the second user 115-2 may send ticker addition requests 270-1 and 270-2 respectively. In said example, considering that the second user 115-2 has not subscribed for the ticker generation service, the subscriber entity 135 may determine that the ticker addition request 270-2 received from the second user 115-2 is not valid. Accordingly, the subscriber entity 135 may discard the ticker addition request 270-2. Further, considering that the first user 115-2 has subscribed for the ticker generation service, the subscriber entity 135 may forward the ticker addition request 270-1 to the ticker generation system 105.

In an example, the subscriber entity 135 may encapsulate the ticker addition request 270-1 based on Point-to-Point Protocol over Ethernet (PPPoE) protocol and provide the same to the ticker generation system 105 through IGMP forking. It will be understood that in place of PPPoE protocol any other protocol, such as, rapid scanning tree protocol (RSTP) and user datagram protocol (UDP) may also be used. Through IGMP forking, the subscriber entity 135 may forward an encapsulated ticker addition request 275 to the ticker generation system 105.

In another implementation, the ticker identification module 230 may be configured to determine whether a ticker addition request received from a user is a valid request or not. In said implementation, the subscriber entity 135 may forward all the ticker addition requests, such as, the ticker addition requests 270-1 and 270-2, to the ticker generation system 105. Further, the subscriber database 130 having subscriber list may be associated with the ticker generation system 105. Accordingly, if it is determined that the user is not a valid subscriber, the ticker identification module 230 may discard the request. However, if it is determined that the user is a valid subscriber, the ticker identification module 230 may further process the ticker addition request.

Further, once a valid ticker addition request is received, the ticker identification module 230 may identify a ticker 110 to be added. For example, the ticker identification module 230 may obtain the ticker ID, of the ticker, corresponding to the user ID of the user device 115-1. Upon identifying the ticker 110 to be added, the ticker generation module 145 may generate the identified ticker 110.

Upon generating the ticker 110, the ticker generation module 145 may provide a video stream having the ticker 110 to a user who has requested for the ticker 110. In an example, the ticker generation module 145 may superimpose the ticker 110 on the video stream corresponding to media content being currently viewed by the user. The ticker 110 may be superimposed using techniques, such as, text ticker. Further, the ticker 110 may be superimposed based on layout, design or ticker position selected by the user. It will be understood that multiple tickers 110 may be generated and provided along with the video stream of the currently viewed channel.

Referring back to the example illustrated in Fig. 2b, the ticker generation system 105 may provide the video stream 280 with ticker to the first user 115-1. The ticker generation system 105, in an example, may provide the video stream 280 directly to the first user 115-1 as a unicast service instead of routing the same through a subscriber entity, such as, DSLAM as a multicast service user 115. In an example, the video stream may be encapsulated using protocols, such as, PPPoE, RSTP, and UDP. Further, the tickers 110 may be provided irrespective of channel zapping. Thus, the users, such as, the first user 115-1 may continue to receive the tickers 110, which are customized based on their preferences user 115.

As mentioned previously, the ticker generation module 145 generates a ticker 110 based on user preferences. In an implementation, upon identifying a ticker 110 to be generated, the ticker generation module 145 may determine whether content corresponding to the identified ticker 110 is already available, say in the ticker data 245. If the content of the identified ticker 110 is available in the ticker data 245, the content may be imported from the ticker data 245. On the other hand, if the content is unavailable, the ticker generation module 145 may create the content corresponding to the identified ticker 110. The content may include text, images, links, video streams, audio streams, or any combination thereof.

For example, if the user has requested for stock prices and content for such a ticker is already available in the ticker data 245, the ticker generation module 145 may not create content corresponding to this ticker again and may import the content from the ticker data 245 to generate the ticker 110. In another example, if the user has requested for RSS feeds corresponding to his web account for a social networking portal, the ticker generation module 145 may determine that a new ticker is to be created. In said example, the RSS feeds may be imported from a webserver corresponding to the social networking portal in Extensible Markup Language (XML) format using HTTP protocol. The imported information may be parsed using any programming language to obtain the content of the ticker 110. Further, the imported information may be stored in the ticker data 245.

In one implementation, the ticker generation module 145 may process the obtained content, to generate the ticker 110, based on the user preferences like dimensions of content holder having the ticker content, font or color of content, etc. In an example, the obtained content may be converted into an image to generate the ticker 110. Further, the ticker generation module 145 may also modify the ticker 110 based on ticker modification triggers received from a user, such as the first user 115-1, to provide a modified ticker. For example, while viewing a video stream with a particular ticker 110, the first user 115-1 may change his preferences pertaining to the ticker 110 and provide the same to the ticker generation system 105. Upon receiving such triggers, the ticker generation module 145 may accordingly modify the layout, design, content, size, position, etc. of the ticker 110.

Additionally, in case the user, such as, the first user 115-1 wishes to temporarily remove the tickers 110, the users may send a ticker removal request. In an example, the subscriber entity 135 receives the ticker removal request and forwards the ticker removal request to the ticker generation system. The ticker removal request may also be provided in the membership report. Referring to the example discussed in Fig. 2b, the first user 115-1 may send a ticker removal request 285, which may be received by the subscriber entity 135. The subscriber entity 135 may request the ticker generation system 105 to remove the tickers 110 from the video stream by way of a ticker removal request 290.

Upon receiving the ticker removal request, incase the IGMP proxy is enabled and the media content corresponding to a channel requested by the user is available in the subscriber entity 135, then the subscriber entity 135 may forward a video stream having the media content using the multicast service. However, if the requested media content is not available in the subscriber entity 135 then a join request may be placed to the ticker generation system 105 and accordingly a video stream may be provided to the user, such as, the first user 115-1 through the subscriber entity 135. Referring to the example discussed above, considering that media content requested by the first user 115-1 is available at the subscriber entity 135, the subscriber entity 135 may provide a video stream 265-3 without the ticker to the first user 115-1.

As mentioned previously, the ticker generation system 105 may process the ticker addition requests; likewise, the ticker removal requests may be received and processed by the ticker generation system 105. Thus, the users are provided with an option to add or remove customized tickers, based on their preferences, thereby adding on to user experience.

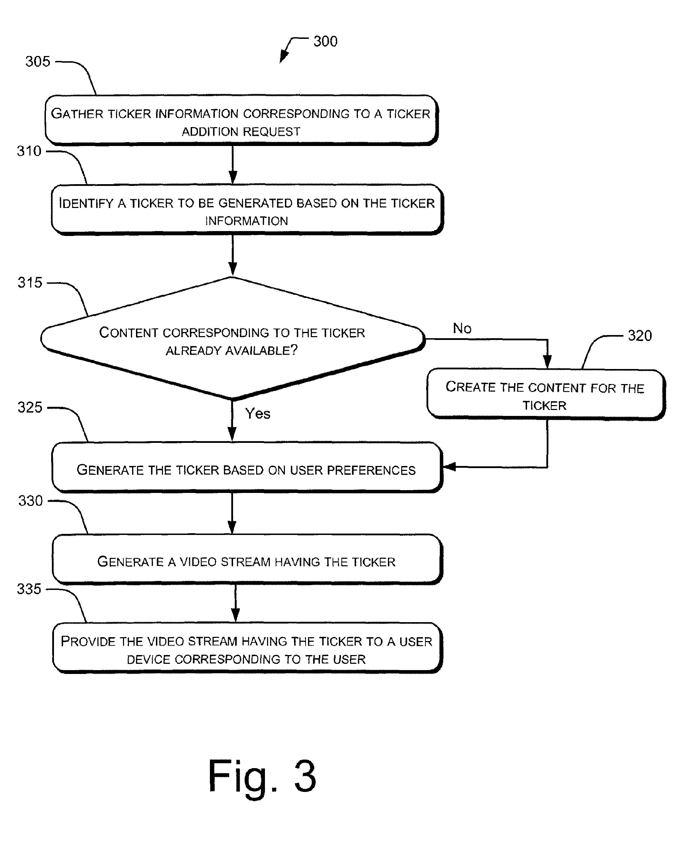

Figure 3 illustrates a method 300 for providing tickers based on user preferences, according to an embodiment of the present subject matter. The order in which the method 300 is described is not intended to be construed as a limitation, and any number of the described method blocks can be combined in any order to implement the method 300, or an alternative method. Additionally, individual blocks may be deleted from the method without departing from the spirit and scope of the subject matter described herein. Furthermore, the method can be implemented in any suitable hardware, software, firmware, or combination thereof.

A person skilled in the art will readily recognize that steps of the method can be performed by programmed computers. Herein, some embodiments are also intended to cover program storage devices, for example, digital data storage media, which are machine or computer readable and encode machine-executable or computer-executable programs of instructions, wherein said instructions perform some or all of the steps of the described method. The program storage devices may be, for example, digital memories, magnetic storage media such as a magnetic disks and magnetic tapes, hard drives, or optically readable digital data storage media. The embodiments are also intended to cover both communication network and communication devices configured to perform said steps of the exemplary method.

At block 305, ticker information corresponding to a ticker addition request is gathered. The ticker addition request is indicative of addition of at least one ticker, such as the tickers 110, to a video stream of a channel being currently viewed by a user. The ticker information includes at least one of a ticker ID, a user ID of a user device associated with the user, and a channel ID of media content currently being provided to the user device. In an implementation, the ticker addition request may be received by the subscriber entity 135. In an example, the subscriber entity 135 may forward all the ticker addition requests, which may be valid or invalid, to the ticker addition system 105. In another example, the subscriber entity 135 may only forward valid ticker addition request.

At block 310, at least one ticker to be generated is identified based in part on the ticker information. In one implementation, the ticker identification module 230 is configured to identify the ticker. The ticker identification module 230 may identify the ticker based on the ticker ID.

At block 315, it is determined whether content corresponding to the identified ticker is already available in a database, such as, the ticker data 245. The database may store content for popular tickers, such as, news snippets, traffic updates, stock prices and match scores. In one implementation, the ticker generation module 145 determines whether content corresponding to the identified ticker is already available in the ticker data 245. If at block 315, it is determined that the content is not available ('No' branch of block 315), method 300 branches to block 320.

At block 320, the content for the ticker may be created. In an implementation, the ticker generation module 145 may create the content for the ticker. For example, if it is determined that the content corresponding to the ticker requested by the user is not available in the database, the content may be imported and processed further to create the content for the ticker.

However, if at block 315 it is determined that content is available in the database '`Yes' branch of block 315), the method 300 proceeds to block 325. At block 325, the ticker is generated using the content and based on user preferences. In an implementation, the ticker generation module 145 may generate the ticker. For example, a user may have requested for a particular layout, such as, particular font and orientation of the content of ticker; and dimensions of a content holder having the content. The ticker generation module 145 may generate the ticker based on the layout preferred by the user.

At block 330, a video stream with the ticker is generated based on the user preferences. The video stream may correspond to media content currently provided on the user device. In an example, the ticker may be superimposed on the video stream using techniques, such as, text ticker. Further, the ticker may be superimposed based on the user preferences, for instance, the ticker may be superimposed such that it is appears as a horizontal scrolling ticker at the bottom of a display unit of a user device corresponding to the user. In one implementation, the ticker generation module 145 may generate a video stream having the ticker.

At block 335, the video stream having the ticker is provided to the user. In an example, the video stream is provided to the user using a unicast service. Thus, the user receives ticker customized based on his preferences. Accordingly, the user may be able to enjoy media content corresponding to multiple channels at the same time. Further, the user may get RSS feeds corresponding to his web account and watch media content corresponding to a channel simultaneously.

Although embodiments for providing tickers based on preferences of a user have been described in language specific to structural features and/or methods, it is to be understood that the present subject matter is not necessarily limited to the specific features or methods described. Rather, the specific features and methods are disclosed as exemplary embodiments for generating tickers.

## Claims

1. A method for providing tickers comprising:
gathering ticker information corresponding to a ticker addition request provided by a user device;
identifying at least one ticker to be generated based in part on the ticker information;
generating the at least one ticker based on preferences of a user associated with the user device; and
providing a video stream having the at least one ticker, for displaying on the user device.

2. The method for providing tickers as claimed in claim 1, wherein the providing further comprises superimposing the at least one ticker on the video stream based on the preferences of the user.

3. The method for providing tickers as claimed in claim 1, the generating further comprises creating content corresponding to the one at least ticker, when the content unavailable in ticker data.

4. The method for generating tickers as claimed in claim 3, wherein the creating further comprises obtaining the content corresponding to the at least one ticker from Really Simple Syndication (RSS) feeds from a web profile associated with the user device.

5. The method for generating tickers as claimed in claim 1, wherein the method further comprises ascertaining whether the ticker addition request provided by the user device is valid, wherein the ticker information is gathered when the ticker addition request is valid.

6. The method for generating tickers as claimed in claim 1, wherein the ticker information includes at least one of a user ID associated with the user device, a ticker ID associated with the at least one ticker, and a channel ID corresponding to media content currently being provided to the user device.

7. The method for generating tickers as claimed in claim 1, wherein the method further comprises providing the video stream without the at least one ticker when a ticker removal request is received.

8. A ticker generation system comprising:
a processor; and
a memory coupled to the processor, the memory comprising,
a ticker identification module configured to identify at least one ticker to be generated based in part on ticker information associated with a ticker addition request provided by a user device; and
a ticker generation module configured to generate:
the at least one ticker based on preferences of a user associated with the user device; and
a video stream having the at least one ticker based on the preferences of the user.

9. The ticker generation system as claimed in claim 8, wherein the ticker generation system implements one of an internet group management protocol (IGMP) and direct television broadcast (DTB) service protocol.

10. The ticker generation system as claimed in claim 8, wherein the ticker generation module is further configured to create content corresponding to the at least ticker, when the content is unavailable in ticker data to generate the at least one ticker.

11. The ticker generation system as claimed in claim 8, wherein the ticker generation module is further configured to provide the video stream with a modified ticker corresponding to a ticker modification trigger provided by the user device.

12. The ticker generation system as claimed in claim 8, wherein the ticker addition request is provided in a membership report.

13. A subscriber entity comprising:
a processor; and
a memory coupled to the processor, the memory comprising a subscription module configured to,
ascertain whether a ticker addition request provided by a user device is valid; and
forward the ticker addition request to a ticker generation system, when the ticker addition request is valid.

14. A computer-readable medium having embodied thereon a computer program for executing a method comprising:
gathering ticker information corresponding to a ticker addition request provided by a user device;
identifying at least one ticker to be generated based in part on the ticker information;
generating the at least one ticker based on preferences of a user associated with the user device; and
further generating a video stream having the at least one ticker, based on the preferences of the user, wherein the video stream corresponds to media content currently running on the user device.

15. The computer readable medium as claimed in claim 14, wherein the method further comprises unicasting the video stream having the at least one ticker to the user device.
